# EUROPEAN PATENT SPECIFICATION

(11) **EP 1 051 011 B1**
(45) Date of publication and mention of the grant of the patent: **16.03.2005**
(21) Application number: 99307199.2
(22) Date of filing: 13.09.1999
(51) Int. Cl.: H04L 29/06, H04L 12/22

(54) **System for preventing an illegal copy of digital contents**
System zur Verhinderung illegalen Kopien von digitale Inhalte
Système pour empêcher la copie illicite de données numériques

(30) Priority: 01.05.1999 KR 9915770; 01.05.1999 KR 9915771
(43) Date of publication of application: 08.11.2000
(73) Proprietor: Samsung Electronics Co., Ltd., Suwon-city, Kyungki-do (KR)
(72) Inventor: Lee, Chang Hyi, Apkujung Building, Seoul (KR); Chung, Ho Suk, Kangnam-gu, Seoul (KR); Kang, Eun-Seong, Kangnam-gu, Seoul (KR)
(74) Representative: Chugg, David John

(56) References cited:
- EP-A- 0 561 685
- "5C Digital Transmission Content Protection White Paper" INTERNET CITATION, 14 July 1998 (1998-07-14), XP002213172 Retrieved from the Internet: <URL:http://www.dtcp.com/data/wp_spec.pdf> [retrieved on 2002-09-11]
- ONUFRYK P Z ET AL: "Consumer devices for networked audio" INDUSTRIAL ELECTRONICS, 1997. ISIE '97., PROCEEDINGS OF THE IEEE INTERNATIONAL SYMPOSIUM ON GUIMARAES, PORTUGAL 7-11 JULY 1997, NEW YORK, NY, USA,IEEE, US, 7 July 1997 (1997-07-07), pages SS27-SS32, XP010265134 ISBN: 0-7803-3936-3
- CHOUDHURY A K ET AL: "COPYRIGHT PROTECTION FOR ELECTRONIC PUBLISHING OVER COMPUTER NETWORKS" IEEE NETWORK, IEEE INC. NEW YORK, US, vol. 9, no. 3, 1 May 1995 (1995-05-01), pages 12-20, XP000505280 ISSN: 0890-8044

## Description

The present invention relates to a system for preventing an illegal copy of digital contents, and more particularly to a system for preventing an illegal copy of digital contents which forms secret channels between all the systems connected to users and exchanges contents through the formed secret channels in order to safeguard digital contents from illegal copying.

In recent years, the communications environment has rapidly been developed when considering that a lot of data is provided through the internet, a lot of terminal units are provided to which data can be easily downloaded from the internet through internet hookup, and the like.

Therefore, people obtain a wide variety of data by using such a communications environment. That is, individuals have internet appliances having communication equipments and download various data from the internet by using the internet appliances.

The term internet appliance is intended to cover equipment such as a PC phone, a PDA, a Web Phone, a Mobile Phone, and the like, which are hereinafter referred to herein as first content output units in.

Because of the expansion in the communications environment, there are now many digital content suppliers who are willing and able to provide much more digital data to such first content output units than previously, and those digital contents suppliers provide users with digital contents to such first content output unit, by compressing the contents according to MP3, AAC, G2 methods.

Digital contents which are used in the present invention mean all data including audio, video data, as well as character data such as song words, movie captions, and the like to be provided through the internet.

In particular, the MP3 which is the audio data of the above digital contents is downloaded to the first content output unit as well as the second content output unit such as an MP3 player and then reproduced.

In the meantime, the MP3 is downloaded to a content storage unit such as a smartmedia card built in the first content output unit, and the MP3 downloaded in the content storage unit is reproduced through the second content output unit.

However, as stated above, there is a drawback in that digital data downloaded to the first and second content output units and the content storage unit is easily copied to be illegally distributed.

EP-A-0 561 685 discloses an electronic data protection system wherein a vendor computer has a personal key generating unit for generating a medium key based on a medium number, an electronic data decrypting key and an encrypting unit for encrypting electronic data and generating encrypted permission information based on the medium key. A user computer has a personal key generating unit for generating a medium key based on the medium number, a decrypting unit for decrypting the encrypted permission information based on the medium key to generate the electronic data decrypting key and a decrypting unit for decrypting the encrypted electronic data based on the decrypting key to generate plain text electronic data.

With a view to solve or reduce the above problem, it is an aim of embodiments of the present invention to provide a system for preventing an illegal copy of digital contents for preventing the illegal copying and distribution of digital content downloaded by forming a secret channel between all the system mutually connected as users download and reproduce the digital content.

According to the present invention there is provided a system as set forth in the appended claims. Preferred features of the invention will be apparent from the dependent claims, and the description which follows. According to an aspect of the present invention, there is provided a system for preventing an illegal copy of digital contents, comprising: authorization recognition means for generating a first authentication qualification key and a first authentication qualification key data in response to an externally input second registration request signal; content supply means for transmitting the second registration request signal to the authorization recognition means, storing a first authentication qualification key and the first authentication qualification key data input from the authorization recognition means, and generating a second authentication qualification key and a second authentication qualification key data; first content output means for outputting a third registration request signal to the content supply means, and storing the second authentication qualification key and the second authentication qualification key data input from the content supply means; and characterised in that: the authorization recognition means forms a first channel key capable of sharing with the content supply means in response to a first registration request signal inputted from the content supply means, and outputs an encoded first authentication qualification key and an encoded first authentication qualification key data to the content supply means via a secret channel formed by the first channel key.

The content supply means may interpret and store the first authentication qualification key and the first authentication qualification key data input from the authorization recognition means via the secret channel by using the first channel key.

The content supply means may form a second channel key capable of sharing with the first content output means in response to the second registration request signal input from the first content output means, and output a second authentication qualification key and an encoded authentication qualification key data to the first content output means through a secret channel formed by the second channel key.

Preferably, the first content output means interprets and stores the second authentication qualification key and the second authentication qualification key data inputted from the content supply means through the secret channel by using the second channel key.

Preferably, the authorization recognition means is for generating a manufacturer key and a manufacturer key data in response to an externally input first registration request signal, generating a first table and a second table by using the manufacturer key and the manufacturer key data, and generating a first authentication qualification key and a first authentication qualification key data in response to the second registration request signal inputted from external.

Preferably, the system includes a record/reproduction apparatus supply means for outputting the first registration request signal to the authorization recognition means, and storing the manufacturer key and the manufacturer key data inputted from the authorization recognition means.

Preferably, the content supply means outputs the second table, and generates the second authentication qualification key and a second authentication qualification key data in response to the externally input third registration request signal; and the first content output means outputs the externally input manufacturer key data to the content supply means, encoding and outputting the manufacturer key detected from the second table in response to the manufacturer key data.

Preferably, the system includes a second content output means for storing the manufacturer key and the manufacturer key data input from the authorization recognition means, outputting the manufacturer key data to the content supply means through the first content output means, and comparing the manufacturer key with the manufacturer key of the second table input from the first content output means in order to judge if the stored manufacturer key is authenticated.

Preferably, the first table generated from the authorization recognition means contains the manufacturer key data, the manufacturer key, and an identifier corresponding to the manufacturer key, and is stored only in the authorization recognition means.

The second table generated from the authorization recognition means and output to the content supply means has an identifier corresponding to the manufacturer key data and the manufacturer key, data from encryption of the manufacturer key by using a token, and a token.

A content storage means may be further included which is connected to the first content output means or the second content output means and stores data downloaded from the content supply means.

Preferably, the authorization recognition means forms a first channel key capable of sharing with the content supply means in response to a first registration request signal inputted from the content supply means, and outputs an encoded first authentication qualification key and an encoded first authentication qualification key data to the content supply means via a secret channel formed the first channel key.

The content supply means preferably forms a second channel key capable of sharing with the first content output means in response to the second registration request signal input from the first content output means, and outputs a second authentication qualification key and an encoded authentication qualification key data to the first content output means through a secret channel formed by the second channel key.

Preferably, the first content output means interprets and stores the second authentication qualification key and the second authentication qualification key data inputted from the content supply means through the secret channel by using the second channel key.

The token may be randomly generated by the authorization recognition means.

The first content output means preferably forms a third channel capable of being shared with the second content output means, encodes a third channel key with a token inputted from the content supply means and transmits to the second content output means.

The second content output means may extract a token from encoded manufacturer data from the first content output means by using the stored manufacturer key in advance, interprets and stores the third channel key by using the token to form a secret channel with the first content output means.

Preferably, the content supply means supplies an encoded digital content; the first content output means including a database which has reproduction data of a digital content downloaded from the content supply means, encodes the database by using the third channel key for storage, interprets the reproduction data of the digital content inputted from external by using the third channel key to be compared with a reproduction data of the database, to thereby judge if an illegal copy of the digital content is performed; and the second content output means updates the reproduction data of the digital content stored in advance by interpreting the reproduction data of the digital content input from the first content output means by using the third channel key, and transmits the updated reproduction data of the digital content to the first content output means.

The database may be separated with an identifier data area of the digital content, an updated token data area, an data area for a present state of the digital content, and a reproduction control data area, and has the corresponding data.

The data area for the present state of the digital content preferably include: data indicating that the digital content is downloaded in a copy form from the first content output means to the second content output means; data indicating that the digital content is downloaded in a transmission form from the first content output means to the second content output means; and data indicating that the digital content is downloaded and uploaded between the first content output means and the second content output means.

The reproduction control data area of the digital content may include: data for reproduction times of the digital content; data for a reproduction expiration period of the digital content; and data for an amnesty period of the digital content.

For a better understanding of the invention, and to show how embodiments of the same may be carried into effect, reference will now be made, by way of example, to the accompanying diagrammatic drawings in which:
Figure 1 is a schematic view for explaining a system for preventing an illegal copy of digital contents according to an embodiment of the present invention;
Figures 2-5 are views for briefly explaining registration requests or digital content reproductions of respective blocks of Figure 1;
Figure 6 is a view for showing an example of a file format which is supported by the embodiment of the present invention;
Figure 7 is a block diagram for showing digital content processes in a content storage unit of the embodiment of the present invention;
Figure 8 is a view for showing an output source capable of being additionally connected to the embodiment of the present invention; and
Figure 9 is a view for showing an input control block diagram for supporting the output source of Figure 8.

Hereinafter, an preferred embodiment of the present invention will be described in detail with reference to the accompanying drawings.

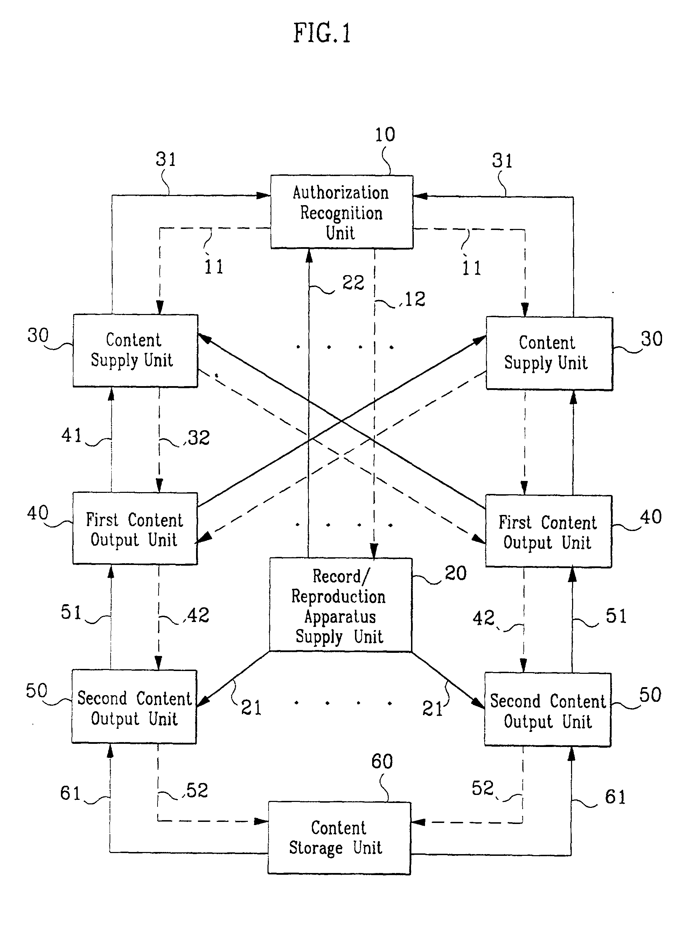

Figure 1 is a schematic view for explaining a system for preventing an illegal copy of digital contents according to an embodiment of the present invention, in which the structure is as follows.

An authorization recognition unit 10 generates a manufacturer key and a manufacturer key data 12 in accordance with a first registration request signal 22 inputted from a record/reproduction apparatus supply unit 20, described later, and outputs a manufacturer key and a manufacturer key data 12 to the record/reproduction apparatus supply unit 20. Further, the authorization recognition unit 10 uses the manufacturer key and a manufacturer key data 12,generates first and second tables , and generates a first authentication qualification key and a first authentication qualification key data 11 in accordance with a second registration request signal 31 inputted from a content supply unit 30.

The first authentication qualification key and the first authentication qualification key data 11 mean a public key(PubKey_{ISP}), a public key data(Cert_{CA}(PubKey_{ISP})), and a private key(PrvKey_{ISP}) of the content supply unit 30 generated from the authorization recognition unit 10.

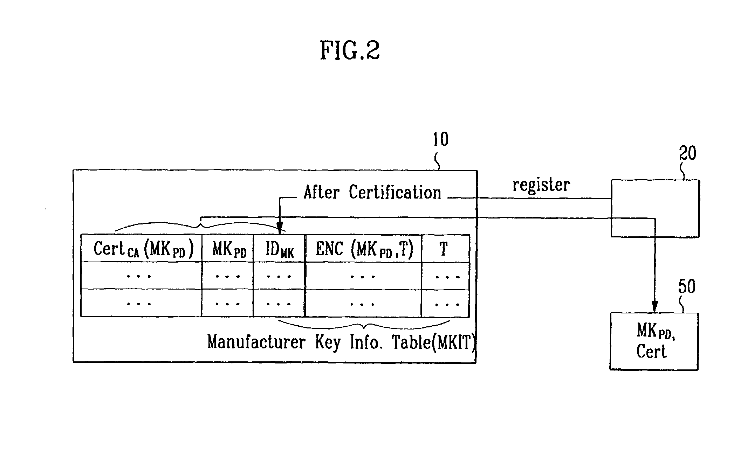

Further, the first table, as shown in Figure 2, contains a manufacturer key data(Cert(MK_{PD})), the manufacturer key(MK_{PD}), and an identifier (ID_{MK}) corresponding to the manufacturer key data and the manufacturer key, and is stored in only the authorization recognition unit 10. Further, the second table is generated from the authorization recognition unit 10 and outputted to the content supply unit 30, and contains the identifier(ID_{MK}), data(ENC(MK_{PD}, T)), and a token(T) which encodes the manufacturer key by using the token.

At this time, the authorization recognition unit 10 forms a first channel key(k) which can be shared with the content supply unit 30 in accordance with the second registration request signal 31 inputted from the content supply unit 30, and outputs the first authentication qualification key and the first authentication qualification key data 11 which is encoded into the content supply unit 30 through a secret channel formed by the first channel key(k).

The first channel key is a key generated from encryption of the authorization recognition unit 10 by using data which the content supply unit 30 has.

The record/reproduction apparatus supply unit 20 outputs the first registration request signal 22 to the authorization recognition unit 10, stores and manufactures the manufacturer key and the manufacturer key data (MK_{PD}, (Cert_{CA}(MK_{PD}); 12) inputted from the authorization recognition unit 10 to be recorded in internal memory of the second content output unit 50, described later, which is a record/reproduction apparatus.

The content supply unit 30 outputs the second registration request signal 31, stores the first authentication qualification key, the first authentication qualification key data, and the second table 11 inputted from the authorization recognition unit 10, and generates a second authentication qualification key and authentication qualification key data 32 in response to a third registration request signal 41 inputted from the first content output unit 40 described later.

In the meantime, the content supply unit 30 interprets and stores the first authentication qualification key and the first authentication qualification key data 11 inputted from the authorization recognition unit 10 through the secret channel by using the first channel key k.

At this time, the content supply unit 30 forms the second channel key k which can be shared with the first content output unit 40 in response to the second registration request signal 41 inputted from the first content output unit 40, and transmits the second authentication qualification key(PubKey_{ISP}) and the second authentication qualification key data (Cert_{CA}(PubKey_{ISP})) which are encoded as the first content output unit 40 through the secret channel formed by the second channel key(k).

The first content output unit 40 outputs the third registration request signal 41 to the content supply unit 30, stores the second authentication qualification key and the second authentication qualification key data 32 inputted from the content supply unit 30, transmits a manufacturer key data inputted from the second content output unit 50, described later, to the content supply unit 30, encodes and outputs the manufacturer key detected from the second table in response to the manufacturer key data.

The second channel key(k) is a key generated through encryption of the content supply unit 30 by using data which the first content output unit 40 has, and is shared by the content supply unit 30 and the first content output unit 40.

Further, the first content output unit 40 stores a database encoded by the third channel key(CK_{PD-LCM}), wherein the database has a digital content reproduction data downloaded from the content supply unit 30, interprets by the third channel key(CK_{PD-LCM}) the digital content reproduction data inputted from the second content output unit 50, and compares the digital content reproduction data with the database production data, and judges whether the digital content has been illegally copied.

Here, the database contains an identifier data area of the digital content, an updated token data area, a data area for a present state of the digital content, and a reproduction control data area.

Further, the data area for a present state of the digital content has data informing if the digital content is downloaded from the first content output unit 40 to the second content output unit 50 in a copy form, data informing if the digital content is downloaded from the first content output unit 40 to the second content output unit 50 in a transmission form, and data informing if the digital content is downloaded or uploaded between the first content output unit and the second content output unit.

Further, the reproduction control data area of the digital content has data for reproduction times of the digital content; and data for reproduction expiration period of the digital content, and data for amnesty period of the digital content.

In the meantime, the first content output unit 40 interprets and stores the second authentication qualification key and the second authentication qualification key data inputted from the content supply unit 30 through the secret channel by using the second channel key(k).

Lastly, the first content output unit 40 forms the third channel key(CK_{PD-LCM}) which can be shared with the second content output unit 50, encodes the third channel key(CK_{PD-LCM}) inputted from the content supply unit 30 into a token, and transmits the second output unit 50.

At this time, the token T is randomly generated by the authorization recognition unit 10.

The second content output unit 50 stores the manufacturer key(MK_{PD}) and the manufacturer key data (Cert_{CA}(MK_{PD})) inputted from the authorization recognition unit 10, transmits the manufacturer key data to the content supply unit 30 through the first content output unit 40, and compares the manufacturer key with the manufacturer key of the second table inputted from the first content output unit 40 for judging if the stored manufacturer key is authenticated.

Further, the second content output unit 50 extracts a token from the manufacturer key data encoded in the first content output unit 40 by using the stored manufacturer key, and interprets and stores the third channel key(CK_{PD-LCM}) by using the token to form a secret channel with the first content output unit 40.

The content storage unit 60 is mounted to the first content output unit 40 or the second content output unit 50 and stores data which is downloaded from the content supply unit 30.

In the meantime, the digital content recorded in the content storage unit 60 is reproduced through the first content output unit 40 or the second content output unit 50.

The record/reproduction apparatus supply unit 20 transmits the first registration request signal 22 to the authorization recognition unit 10, and receives the manufacturer key(MK_{PD}) and the manufacturer key data(Cert_{AC}(MK_{PD})) generated by the first registration request signal 22.

The content supply unit 30 transmits the second registration request signal 31 to the authorization recognition unit 10, transmits the first authentication qualification key data 11 qualified for providing an encoded digital content generated by the second registration request signal, and receives the second table generated from the authorization recognition unit 10.

The first content output unit 40 transmits the second registration request signal 41 to the content supply unit 30, and receives the second authentication qualification key(PubKey_{ISP}) and the second authentication qualification key data (Cert_{CA}(PubKey_{ISP})) and the private key(PrvKey_{LCM}) and the public key(PubKey_{LCM}) of the first content output unit 40 and the identifier(ID_{LCM}).

Further, the first content output unit 40 inputs the manufacturer key data(Cert_{CA}(MK_{PD})) from the second content output unit 50 and transmits the same to the content supply unit 30. Furthermore, the first content output unit 40 extracts and encodes only table data corresponding to the manufacturer key data from the second table, and transmits the encoded table data to the second content output unit 50.

Therefore, the second content output unit 50 inputs and stores the manufacturer key(MK_{PD}) and the manufacturer key data(Cert_{CA}(MK_{PD})) transmitted by the authorization recognition unit 10. Further, the second content output unit 50 transmits the manufacturer key data(Cert_{CA}(MK_{PD})) to the content supply unit 30 through the first content output unit 40, and the second content output unit 50 inputs and interprets the manufacturer key data of the second table transmitted from the first content output unit 40 to store the internal memory.

Operations of the system for preventing an illegal copy of a digital content according to an embodiment of the present invention structured as above will be described in detail with reference to the accompanying drawings.

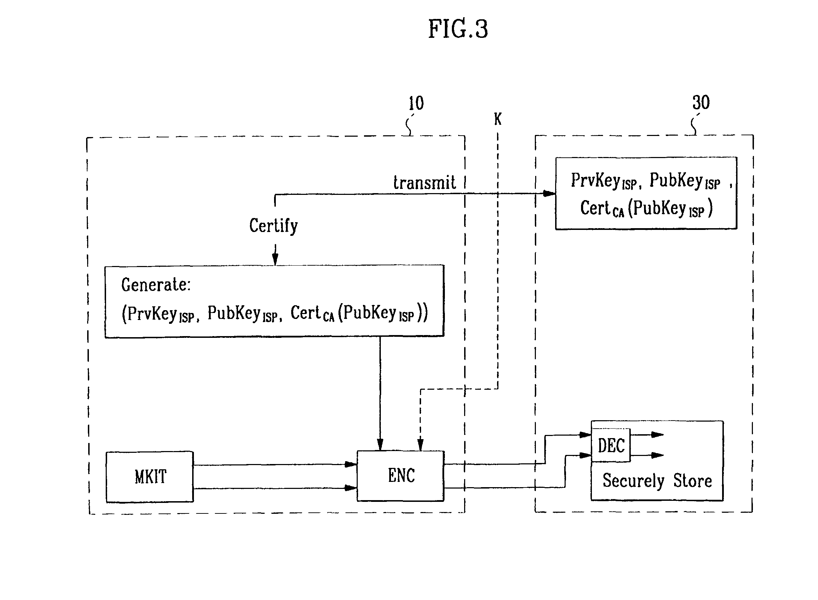

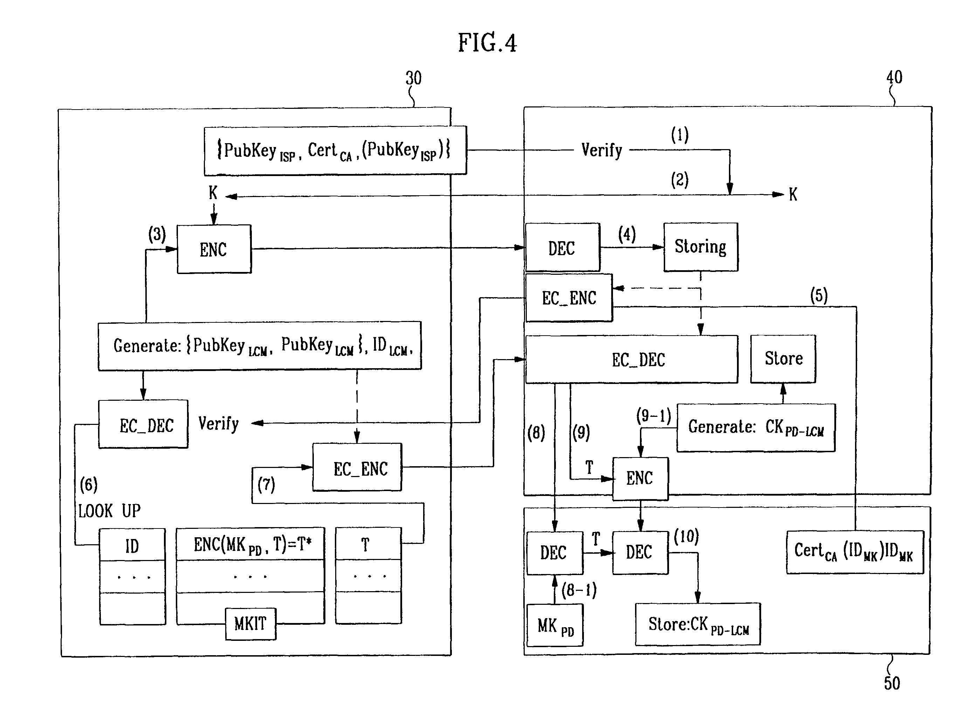

Figure 3 to Figure 5 are views for explaining key and key data flow for a case that respective blocks applied to Figure 1 request a registration or reproduce a digital content.

The accompanying drawings, Figure 3 to Figure 5 are views for showing a concrete embodiment of the present invention, terms employed in the present invention are briefly explained as follows.

Firstly, the authorization recognition unit 10, as a certificate authority(CA), enables the content supply unit 30 to provide a digital content, and enables the first content output unit 40 and the second content output unit 50 to receive the digital content, to thereby recognize an authorization.

Secondly, the record/reproduction apparatus supply unit 20, as a manufacture(MA), manufactures the second content output unit 50 to be provided to users.

Thirdly, the content supply unit 30, as an internet service provider(ISP), provides various data to users as well as a digital content, fourthly, the first content output unit 40, as a licensed SDMI compliant module, is a device which users can use like a general personal computer, the second content output unit 50 is a unit like an MP3 player, and the content storage unit 60 is a smart media card.

Explaining the embodiment of the present invention from now on, first of all, the record/reproduction apparatus supply unit 20 transmits the first registration request signal 22 to the authorization recognition unit 10 in order to download a digital content to a manufactured second content output unit 50 for reproduction.

Then, the authorization recognition unit 10 generates a manufacturer key(MK_{PD}) and a manufacturer key data (Cert_{CA}(MK_{PD})), which the second content output unit 50 can uniquely have, to be transmitted to the record/reproduction apparatus supply unit 20.

Different manufacturer key(MK_{PD}) and different manufacturer key data(Cert_{CA}(MK_{PD})) are generated from every second content output unit 50 which is registration-requested by the record/reproduction apparatus supply unit 20.

Therefore, the record/reproduction apparatus supply unit 20 stores the manufacturer key(MK_{PD}) and the manufacturer key data (Cert_{CA}(MK_{PD})) recognized from the authorization recognition unit 10 in a temporary register area of the second content output unit 50 without other users' notice.

The authorization recognition unit 10 generates the manufacturer key(M_{KPD}) and the manufacturer key data(Cert_{CA}(MK_{PD})) as well as randomly generates a token at the same time which are provided to the record/reproduction apparatus supply unit 20 as stated above.

That is, the authorization recognition unit 10 has two tables. The first table is a table which the authorization recognition unit 10 has and which has the manufacturer key(MK_{PD}) and the manufacturer key data(Cert_{CA}(MK_{PD})) as stated above.

Further, the second table is a manufacturer key data table which is transmitted to the content supply unit 30 by the authorization recognition unit 10 and which has the identifier(ID_{LCM}) of the second content output unit 50, the token encoded by the manufacturer key, and data for the token (refer to Figure 3).

Therefore, the second content output unit 50, which is manufactured and supplied from the record/reproduction apparatus supply unit 20, downloads and reproduces the digital content which is provided from the content supply unit 30.

Further, the content supply unit 30, like the record/reproduction apparatus supply unit 20, can provide a digital content to the first content output unit 40, the second content output unit 50, and the content storage unit 60 due to an authorization recognition from the authorization recognition unit 10.

As stated above, the content supply unit 30 transmits the second registration request signal 31 to the authorization recognition unit 10 in order to recognize a digital content supply authorization.

Therefore, the authorization recognition unit 10, as shown in Figure 3, generates the first authentication qualification key (PubKey_{ISP}) and the first authentication qualification key data(Cert_{CA}(PubKey_{ISP})).

That is, if the second registration request signal 31 is inputted from the content supply unit 30, the authorization recognition unit 10 temporarily forms a plurality of keys (PrvKeyₑₚₕ, PubKeyₑₚₕ) in order to form a secret channel between the content supply unit 30.

Further, the authorization recognition unit 10 generates the private key(PrvKey_{ISP}), the public key(PubKey_{ISP}) as the second authentication qualification key, and the second public key data as the second authentication qualification key data(Cert_{CA}(PubKey_{ISP})) in order for the content supply unit 30 to perform an authorization.

At this time, the second authentication qualification key and the second authentication qualification key data are encoded as the channel key(k) and provided to the content supply unit 30 through the secret channel formed between the authorization recognition unit 10 and the content supply unit 20. Here, the secret channel is formed by the channel key(k) which the authorization recognition unit 10 and the content supply unit 20 are shared.

In the meantime, since the secret channel is safely formed, illegal users can not download any data which is transmitted and received through the secret channel.

Therefore, since the content supply unit 30 interprets and stores in a storage unit data which is transmitted from the authorization recognition unit 10, the digital content can be downloaded to the first content output unit 40, the second content output unit 50, or the content storage unit 60.

Further, the first content output unit 40 transmits the third registration request signal to the content supply unit 30 passing through the processes as stated above. Furthermore, the content supply unit 30 transmits the public key(PubKey_{ISP}) and the public key data (Cert_{CA}(PubKey_{ISP})) as the second authentication qualification key and the second authentication qualification key data to the first content output unit 40, and the first content output unit 40 stores the public key(PubKey_{ISP}) and the public key data (Cert_{CA}(PubKey_{ISP})).

In the meantime, the channel key(k) is mutually shared between the content supply unit 30 and the first content output unit 40, and the first content output unit 40 safely receives the digital content through the secret channel generated by the shared channel key(k).

Further, the content supply unit 30 generates the private key(PrvKey_{LCM}) and the public key(PubKey_{LCM}) of the first content output unit 40 and identifier (ID_{LCM}), such generated data is encoded to the channel key(k) which is transmitted to the first content output unit 40. Furthermore, the first content output unit 40 interprets and stores the transmitted data by using the channel key(k).

At this time, if the second content output unit 50 is connected to the first content output unit 40, the first content output unit 40 generates and encodes by using the token a secret channel key(CK_{PD-LCM}) which is shared with the second content output unit 50 and which is transmitted to the second content output unit 50.

At this time, the token can be extracted from data which is read from the second table of the content supply unit 30 and encoded by the second authentication qualification key(PubKey_{LCM}) and transmitted to the first content output unit 40.

That is, a brief description for extracting the token(T) will be as follows. Since the encoded data which is transmitted to the first content output unit 40 is interpreted by the second authentication qualification key(PubKey_{LCM}) which is stored in the first content output unit 40, the first content output unit 40 can obtain the token(T) and the token data(T*).

The token data(T*) is a token(T) which is encoded by the manufacturer key(MK_{PD}).

Such interpreted token(T) from the first content output unit 40 is used in encoding the secret channel key(CK_{PD-LCM}), and the token data(T*) is transmitted to the second content output unit(50).

At this time, the token data(T*) which is transmitted to the second content output unit 50 is interpreted by the manufacturer key(MK_{PD}) which is stored in the second content output unit 50, and the second content output unit 50 extracts the token (T). Further, the second content output unit 50 interprets the encoded channel key(k) which is transmitted from the first content output unit 40 by using the extracted token and stored in the internal memory.

Therefore, the second content output unit 50 stores the transmitted channel key(k) as well as encodes the registered manufacturer key data to the second authentication qualification key(PubKey_{LCM}) of the first content output unit 40 which is transmitted to the content supply unit 30.

In the meantime, the content supply unit 30 interprets data which is transmitted through the first content output unit 40 and compares the interpreted manufacturer key data and data of the second table. If there is the corresponding data, the content supply unit 30 encodes the token(T) and the token data(T*) of the table contents into the second authentication qualification key(PubKey_{LCM}) and then transmits the second authentication qualification key(PubKey_{LCM}) to the first content output unit 40.

Therefore, the content supply unit 30 can download the digital content to the first content output unit 40 and the second content output unit 50, and the first content output unit 40 and the second content output unit 50 can reproduce the downloaded digital content.

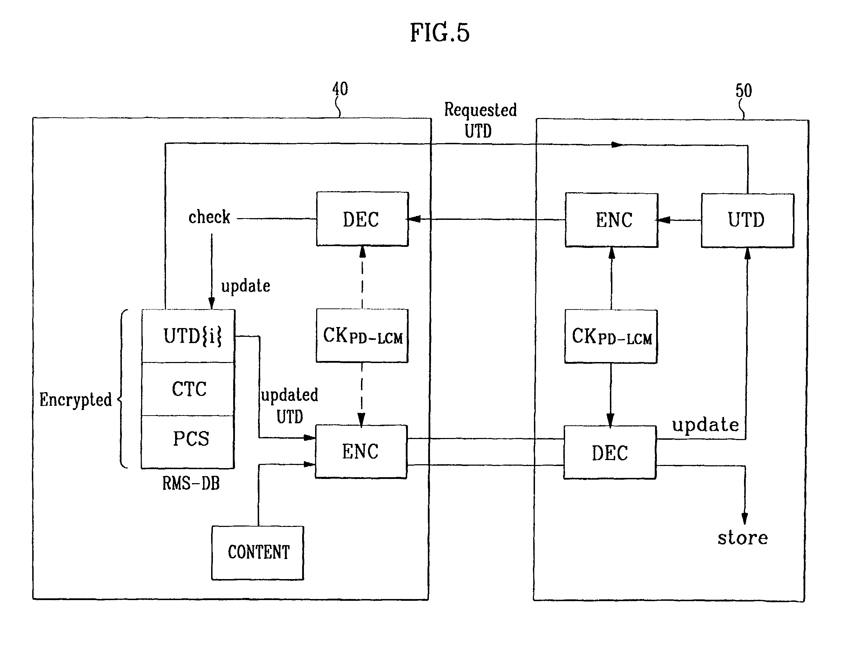

As stated above, in order to prevent an illegal copy as the digital content which is downloaded from the content supply unit 30 according to the request of the first content output unit 40 is again downloaded to the second content output unit 50, the internet appliance 40 has a database(RMS-DB; Right Management System-Data Base) which can check a present state of the digital content together with the digital content (refer to Figure 5).

The database contains an identifier data area of the digital content, an updated token data area, a data area for checking a present state of the digital content, and a reproduction control data area.

Further, the database is stored in the first content output unit 40 in an encoded form by the secret channel key(CK_{PD-LCM}) which the first content output unit 40.

The most important area in the database(RMS-DB) is the updated token area(UTD), and the updated token area(UTD) has different values when the updated token area(UTD) downloads a digital content from the first content output unit 40 to the second content output unit 50, or uploads the digital content from the second content output unit 50 to the first content output unit 40.

At this time, the updated token is transmitted to the first content output unit 40 through the second content output unit 50 to update the stored token in the first content output unit 40.

That is, data registered in the database(RMS-DB) of the first content output unit 40 becomes different every time the first content output unit 40 reproduces, downloads, or updates a digital content downloaded into the first content output unit 40. Therefore, the first content output unit 40 checks the registered data in the database if users legally use the digital content in the case that a request signal for reproduction, dowload, or upload of the digital content is inputted by the users.

Further, in the case that the digital content is downloaded or uploaded between the first content output unit 40 and the second output unit 50, an area is checked which has data for checking a present state of the digital content and which is the second area of the database(RMS-DB).

That is, since the first content output unit 40 checks the third area, when the second content output unit 50 downloads a digital content downloaded from the first content output unit 40 to the second content output unit, the selection of a copy form or a transmission form can be read.

Further, by checking check-in/check-out data included in the second area, the transmission state of the digital content can be read. That is, the check-in data means that a digital content is not downloaded from the first content output unit 40 to the second content output unit 50.

The check-out data means that the digital content is a downloading state from the first content output unit 20 to the second content output unit 50, or that the downloaded digital content is again uploaded to the first content output unit 40.

The last area of the database (RMS-DB) is a reproduction control data area and contains data for reproduction times of a digital content, a reproduction expiration period of the digital content, and an amnesty period of the digital content.

Here, the reproduction times of the digital content is a value which is established when a digital content is provided from the content supply unit 30 to the first content output unit 40 and which controls the reproduction times by counting down one by one every time the digital content is downloaded.

Further, the reproduction expiration period of the digital content does not mean the reproduction of the digital content and the control of the output state, but a period established by the content supply unit 30, and the digital content downloaded from the content supply unit 30 to the first content output unit 40 can be reproduced in the period as stated above.

Lastly, the amnesty period of the digital content enables the digital content downloaded from the content supply unit 30 to the first content output unit 40 to be reproduced irrespectively of the reproduction times of the digital contents or the expiration period.

As stated above, if the content supply unit 30 accepts a download request of a digital content of the first content output unit 40, the content supply unit 30 firstly identifies the ID of the first content output unit 40, judges as the first content output unit 40 legally connected to the content supply unit 30, and downloads a digital content having a file format embodied by the secret system to the first content output unit 40.

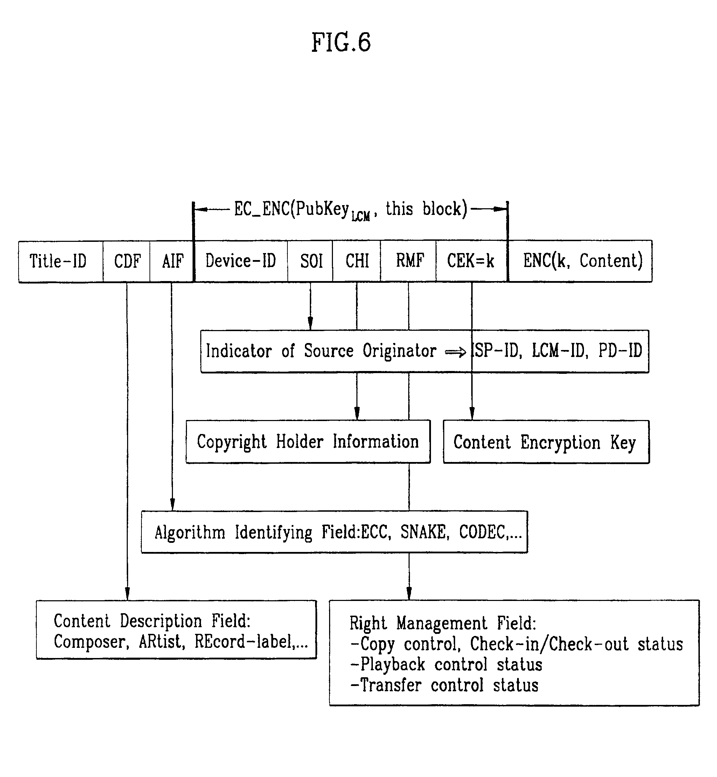

The file format having a digital content transmitted to the first content output unit 40 from the content supply unit 30, as shown in Figure 6, contains a title ID field, a content discription field(CDF), algorithm identifying field(AIF), an indicator of source originator field(SOI), a copyright holder information field(CHI) indicating a copy holder information, a right management field(RMF), a content encription key(CEK), and a digital content field encoded to a content encryption key.

The content discription field has data such as a digital content composer, a singer, a record label or the like.

The algorithm identifying field denotes an algorithm employed in the secret system embodied in the present invention, and there are ECC, SNAKE, CODEC and the like in the algorithm.

The SOI field has one of data of ISP_ID denoting an identifier of a content supply unit 30 of the present invention, LSP_ID denoting an identifier of the first content output unit 40, PD_ID denoting an identifier of the second content output unit 50.

Therefore, in the case that the first content output unit 40 downloads and reproduces a digital content having the format as stated above, firstly an algorithm encoded from the AIF field is identified, and the authentication qualification of the first content output unit 40 is recovered by using the identified encryption algorithm.

Further, the identifier which the first content output unit 40 has and the identifier in the SOI field of the file format are compared to check if there is correspondence between the two. In the case of correspondence, the copy control state from the RMF data, the reproduction control state, and the transmission control state are identified to register them in the database (RMS-DB) which the first content output unit 40 has.

After the above process is performed, a digital content encryption key is extracted by using a CEK field, and the encoded digital content is interpreted by using the encryption key.

At this time, in the case that the first content output unit 40 does not violate any one of the above, the content supply unit 30 judges that the first content output unit 40 is legal, and downloads the digital content.

In the case of changing the RMF field of the file formats, in particular the reproduction control state, the first content output unit 40 replaces the reproduction control state data in two places of the database(RMS-DB) and the file format with desired data.

Further, as stated above, in the case that a digital content downloaded from the first content output unit 40 is again downloaded to the second content output unit 50, the following processes are required.

Firstly, the first content output unit 40 receives the UTD data which the second content output unit 50 of the identifier of the second content output unit by a request to the second content output unit 50.

Therefore, the second content output unit 50 encodes the UTD into the third channel key(CK_{PD-LCM}) shared with the first content output unit 40 and the third channel key(CK_{PD-LCM}) is transmitted to the first content output unit 40 together with the identifier of the second content output unit.

At this time, the first content output unit 40 identifies data transmitted from the second content output unit 50 and extracts the identifier of the second content output unit 50 and the UTD from the transmitted data by using the channel key (CK_{PD-LCM}) shared with the second content output unit 50, and compares the extracted identifier of the second content output unit 50 and the UTD with data registered in the database.

If the UTD is unchanged and the RMF is changed, the first content output unit 40 updates the two places of the database and the file format to the changed RMF.

That is, the first content output unit 40 updates the database to a newly generated UTD, and the updated UTD is encoded by the channel key(CK_{PD-LCM}) and the encoded channel key(CK_{PD-LCM}) is transmitted to the second content output unit 50.

In the meantime, the first content output unit 40 transmits a digital content to the second content output unit 50, and data of an initial transmission control state field is 'Transfer'. As the digital content is transmitted to the second content output unit 50, data of the transmission control state field is changed to 'Transferred'.

As stated above, changed data of the transmission control state field is updated in the database(RMS-DB), and is not changed in the file format. At this time, the transmission control state field has three types of 'Transfer', 'Transferred', and 'Transfer-non'.

Next, as a digital content is transmitted to the second content output unit 50 from the first content output unit 40, data for the copy control state field is initially set to the check-in in the database as well as in the file format, but after the digital content is transmitted, the data for the copy control state field is changed to the check-out both in the database and the file format.

If the data for the copy control state field is set to 'Copy-never', users using the system of the present invention can not download the digital content of the first content output unit 40 to the second content output unit 50.

If the above processes are correctly performed, the digital content is downloaded to the second content output unit 50.

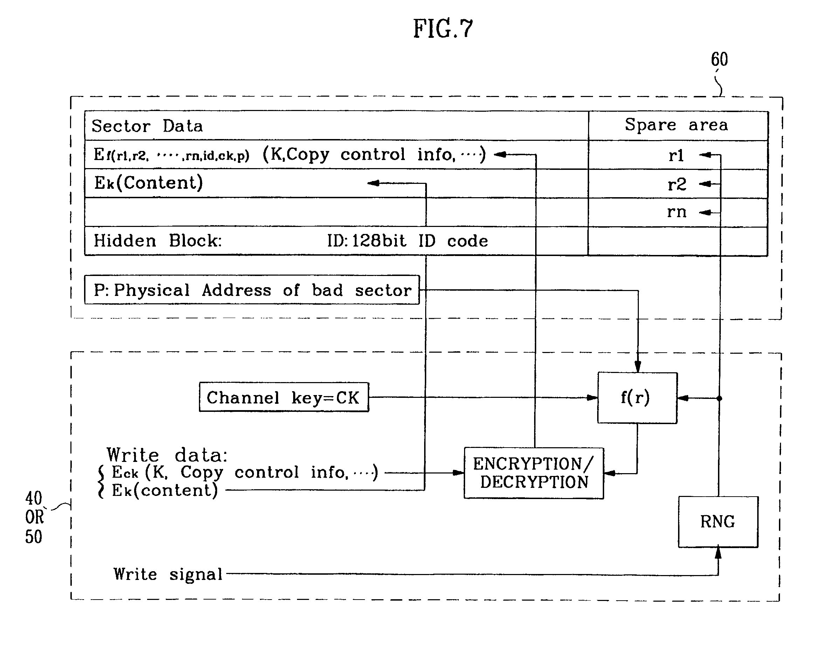

Figure 7 is a view for preventing an illegal copy in downloading to the content storage unit 60 a digital content which the second content output unit 50 has. Firstly, the second content output unit 50 transmits to the content storage unit 60 an encoded digital content to be recorded in the content storage unit 60 and an encoded reproduction data to reproduce the digital content.

At this time, another encryption of data necessary to produce the encoded digital content is performed as follows.

That is, the second content output unit 50 contains a random number generation unit(RNG) for randomly generating a number, and a function process unit(F) for function-processing various inputs and generating predetermined values which only the content storage unit 60 can have.

At this time, values inputted to the function process unit(F) are a random number, a channel key, and a bad sector address and an inherent number which the content storage unit 60 inherently has.

Further, another encryption of an encoded digital content reproduction data is performed by using function values generated in the function process unit(F).

A digital content referred to in the present invention is downloaded from the first content output unit 40 to the second content output unit 50 and the content storage unit 60, or uploaded from the second content output unit 50 to the first content output unit 40. This is denoted by checking a field indicating transmission control state data of file format data which is provided from the database and the content supply unit 30 which the first content output unit 40.

If, as stated above, 'transfer' is indicated as a result that the first content output unit 40 checks the database and the transmission control state data field of the file format, the first content output unit 40 can download a digital content to the second content output unit 50, if the digital content is downloaded from the first content output unit 40 to the second content output unit 50, 'transfer' is changed to 'transferred' in the database and the transmission control state data field of the file format and the changed data is transmitted to the second content output unit 50.

Further, since the digital content downloaded to the second content output unit 50 is not in the first content output unit 40, in order to be again reproduced in the first content output unit 40, the digital content is again uploaded from the second content output unit 50 to the first content output unit 40.

However, the digital content downloaded to the content storage unit 60 from the first content output unit 40 can be reproduced in an arbitrary second content output unit 50. Further, the digital content downloaded to the content storage unit 60 is uploaded to another first content output unit 40 through the second content output unit 50.

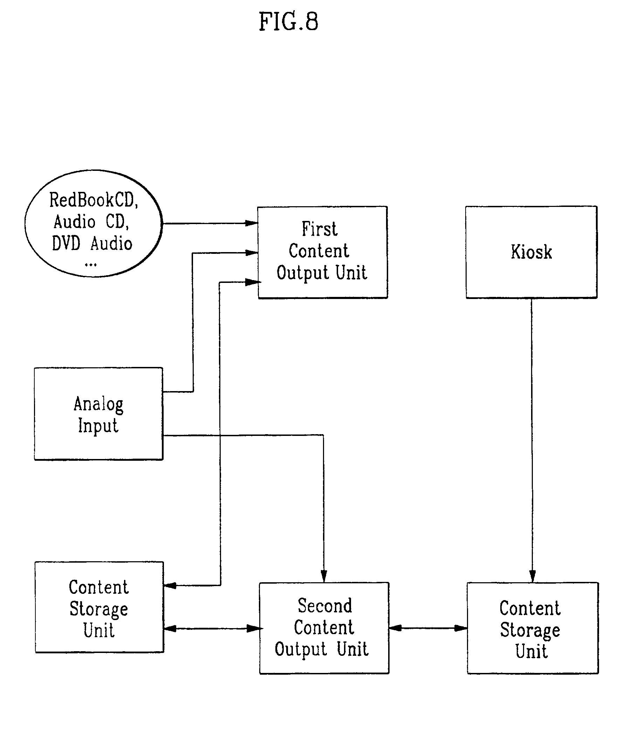

Furhter, various input devices are additionally connected to the first content output unit 40 and the second content output unit 50 applied to the present invention, and such input devices are shown in detail in Figure 8.

That is, the input devices which can be additionally connected to the first content output unit 40 and the second content output unit 50 can be CD such as RedBook CD, audio CD, super audio CD, DVD Disk, and analog input, and the like.

The audio signal inputted through the input devices is inputted to the first content output unit 40, and encoded according to a system supported in the present invention, and then transmitted to the second content output unit 50, or transmitted to the content storage unit 60 to be reproduced through the second output unit 50.

In the meantime, Kiosk in Figure 8 is a unit of an intermediate property of the content supply unit 30 and the first content output unit 40. The kiosk generates a registration request signal for selling an encoded digital content by the content supply unit 30 through a PC connected with an internet.

Therefore, the content supply unit 30 provides to the kiosk the storage medium having a digital content encoded by a system supported in the present invention according to the registration request signal, and the kiosk receives fees from users and transmits a digital content stored in the storage medium.

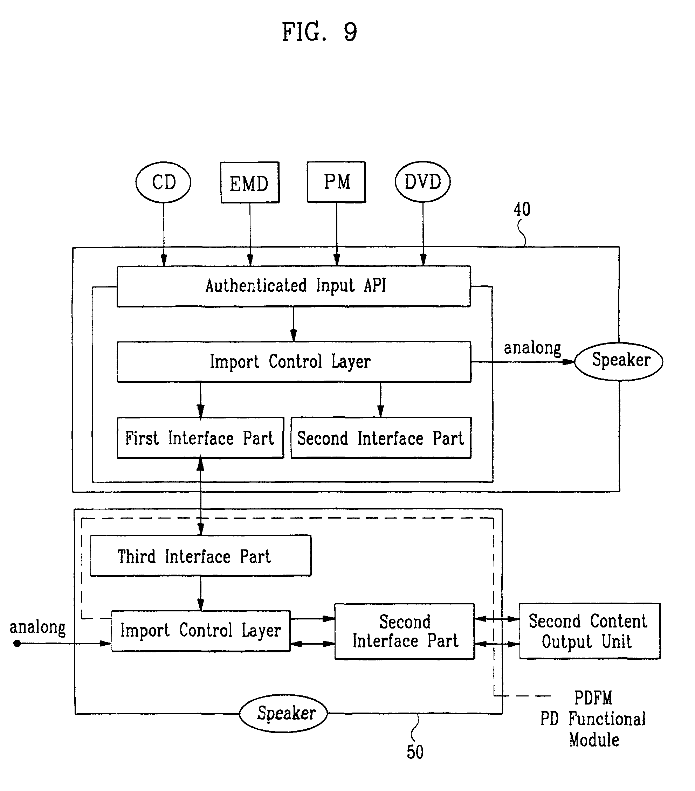

Figure 9 is a view for explaining an input control of the output source of Figure 8.

As shown in Figure 9, applied program interface(API) of the first content output unit(indicated as 'Host' in Figure 9) checks if data inputted through the CD, EMD(content provided over internet), PM, DVD, and the like(hereinafter, referred to as 'input devices') can be reproduced in a system supported in the present invention.

Therefore, if the data can be reproduced in the system supported in the present invention, the API converts data inputted from the input devices to a format which can be reproduced in the system.

In the meantime, as a method which data can be reproduced in the system supported in the present invention as stated above, first, in the case that the input devices are the super CD or DVD, data which checks if data recorded on the storage medium can be copied is in an area out of data area. The API detects the area and uses the data when converting a signal inputted to the first content output unit('40' in Figure 1) to a file format supported in the present invention.

Secondly, in the case that the input device is the EMD and data inputted through the EMD has an encoded format, the API detects an encryption key and an encryption algorithm and uses the data when converting a signal inputted to the first content output unit 40 to a file format supported in the present invention.

Thirdly, if the input device is a general analog input, the API encodes inputted data according to a system supported in the present invention.

In the meantime, the API checks if an input device and data inputted from the input devices are suitable for the system and transmits the following data to the import control layer.

First, data for the type of a storage medium, for example, data for a type of an input device such as audio CD, DVD and the like, second, data for an initial form of data inputted to the first content output unit 40 from an input device, for example, data for a title, a player, a singer and the like, third, data for an encryption key which is data for an encryption algorithm.

At this time, the data is transmitted to the second content output unit 50 from the first content output unit 40 through the first interface part. Further, the data inputted from the third interface part of the second content output unit 50 is inputted to the import control layer of the second content output unit to be restructured in a file format shown in Figure 6.

That is, the file format in Figure 6 formed in the import control layer of the second content output layer 50 indicates data for a storage medium in the title-ID field, data for initial data inputted to an internet appliance from an input device for the CDF, data for an encryption algorithm outputted to the import control layer from the API of the first content output unit for the AIF, LCM-ID in the Device-ID field and SOI field, data for a copyright protection in the CHI field, and following data for the RMF.

First of all, 'copy not available' is indicated for the copy control state, 'check-in/check-out' is selectively indicated for the download/upload, 'reproduction times=no limit or predetermined times' is selectively indicated for the reproduction control state, and 'transmission not available' is indicated for the reproduction control state since the copy control state is 'copy not available' .

Next, CEK=k field which is a field indicating data for an encryption key, if an inputted digital content is not encoded, randomly generates a key(k), and a digital content inputted from the first content output unit is encoded by the key(k) and indicated in the last field(ENC(k, Content)).

At this time, the first content output unit 40, if data inputted through an input device is encoded, judges what algorithm is used for encryption, and checks an encryption algorithm which the second content output unit 50 to transmit an encoded digital content has.

Accordingly, if two algorithms are not matched, the first content output unit 40 interprets an encoded digital content and performs a trans-cypted process which again encodes the digital content with encryption/decryption algorithm which the second content output unit 50 has.

In the meantime, in the file format formed through the process, there is a secret header portion shown in Figure 6 from the Device-ID field to the field which indicates the encryption key. The secret header is encoded by the second authentication qualification key(PubKey_{LCM}) which the first content output unit 40 has.

In the meantime, the first interface part in the first content output unit 40 checks if the second content output unit('50' in Figure 1) has an identifier and the third channel key(CKP_{DP-LCM}) and identifies if the qualification is an authenticated second content output unit 50.

In the meantime, an analog input inputted to the second content output unit 50 is inputted to the import control layer of a PDFM(PD Functional Module) in the seocnd content output unit 50, and the analog input is converted to a file format supported in the present invention by a process described later.

Here, the import control layer, if the analog input is received by frame unit, first encodes the frame, encodes the encoded frame by using a randomly generated key, and if all frames are encoded, a file format as shown in Figure 6 is formed for preventing a copy for an encoded analog input.

In order to prevent an illegal copy as shown in Figure 6, as in data indicated for RMF, an encoded analog input has a detailed information.

That is, 'copy not available' is indicated for the copy control state, 'check-in/check-out' is selectively indicated for the download/upload, 'reproduction times=no limit or predetermined times' is selectively indicated for the reproduction control state, and 'transmission not available' is indicated for the reproduction control state.

Further, data of the Device-ID field and the SOI field which are prepared before the RMF is indicated as 'PD_ID'.

The secret header portion generated via the above process is encoded by the third channel key(CK_{PD-LCM}) which the second content output unit 50 has.

At this time, the second content output unit 50 transmits the encoded digital content to the content storage unit 60, since a digital content which is transmitted to the content storage unit 60 does not indicate the SOI field data as an identifier which the content storage unit 60 has but as 'PD-ID' as stated above, the digital content can not be reproduced via arbitrary second output unit 50.

That is, a digital content recorded on the content storage unit can be reproduced only in the second content output unit 50 which has the same identifier as 'PD-ID' data of the SOI field contained in the content.

Accordingly, as stated above, in the present invention, entire system shares a channel key between units performing mutual communication, forms a safe channel, mutually transmits and receives a digital content, and prevents illegal users from taking the digital content on the way. Further, even though legal users legally downloads a digital content, since the second content output unit has the above structure, illegal copy of a digital content between the second content output unit as well as the content storage unit is prevented.

As stated above, preferred embodiments of the present invention are shown and described. Although the preferred embodiments of the present invention have been described, it is understood that the present invention should not be limited to these preferred embodiments but various changes and modifications can be made by one skilled in the art within the scope of the present invention as hereinafter claimed.

## Claims

1. A system for preventing an illegal copy of digital contents, comprising:
authorization recognition means (10) for generating a first authentication qualification key and a first authentication qualification key data (11) in response to an externally input second registration request signal (31);
content supply means (30) for transmitting the second registration request signal (31) to the authorization recognition means (10), storing a first authentication qualification key and the first authentication qualification key data (11) input from the authorization recognition means (10), and generating a second authentication qualification key and a second authentication qualification key data (32); and
first content output means (40) for outputting a third registration request signal (41) to the content supply means (30), and storing the second authentication qualification key and the second authentication qualification key data (32) input from the content supply means (30);
**characterised in that**:
the authorization recognition means (10) forms a first channel key capable of sharing with the content supply means (30) in response to a first registration request signal (21) inputted from the content supply means (30), and outputs an encoded first authentication qualification key and an encoded first authentication qualification key data (11) to the content supply means (30) via a secret channel formed by the first channel key.

2. The system as claimed in claim 1, wherein the content supply means (30) interprets and stores the first authentication qualification key and the first authentication qualification key data (11) input from the authorization recognition means (10) via the secret channel by using the first channel key.

3. The system as claimed in claim 1 or 2, wherein the content supply means (30) forms a second channel key capable of sharing with the first content output means (40) in response to the second registration request signal (31) input from the first content output means (40), and outputs a second authentication qualification key and an encoded authentication qualification key data to the first content output means (40) through a secret channel formed by the second channel key.

4. The system as claimed in claim 1, 2 or 3, wherein the first content output means (40) interprets and stores the second authentication qualification key and the second authentication qualification key data (32) inputted from the content supply means (30) through the secret channel by using the second channel key.

5. The system of any preceding claim wherein:
the recognition means (10) generates a manufacturer key and a manufacturer key data (12) in response to an externally input first registration request signal (22), generates a first table and a second table by using the manufacturer key and the manufacturer key data, and generates a first authentication qualification key and a first authentication qualification key data (11) in response to the second registration request signal (31) inputted from external.

6. The system of claim 5 further comprising a record/reproduction apparatus supply means (30) for outputting the first registration request signal (22) to the authorization recognition means (10), and storing the manufacturer key and the manufacturer key data (12) inputted from the authorization recognition means (10).

7. The system of claim 6, wherein:
the content supply means (30) stores the second table and generates the second authentication qualification key and the second authentication qualification key data (32) in response to the externally input third registration request signal (41); and
the first content output means (40) outputs the externally input manufacturer key data (12) to the content supply means (30), and encodes and outputs the manufacturer key detected from the second table in response to the manufacturer key data (12).

8. The system of claim 7 further comprising:
a second content output means (50) for storing the manufacturer key and the manufacturer key data (12) input from the authorization recognition means (10), outputting the manufacturer key data (12) to the content supply means through the first content output means (40), and comparing the manufacturer key with the manufacturer key of the second table input from the first content output means (40) in order to judge if the stored manufacturer key is authenticated.

9. The system as claimed in any of claims 6 to 8, wherein the first table generated from the authorization recognition means (10) contains the manufacturer key data (12), the manufacturer key, and an identifier corresponding to the manufacturer key, and is stored only in the authorization recognition means (10).

10. The system as claimed in any of claims 6 to 9, wherein the second table generated from the authorization recognition means (10) and output to the content supply means (30) has an identifier corresponding to the manufacturer key data (12) and the manufacturer key, data from encryption of the manufacturer key by using a token, and a token.

11. The system claimed in any of claims 6 to 10, wherein a content storage means (60) is further included which is connected to the first content output means (40) or the second content output means (50) and stores data downloaded from the content supply means (30).

12. The system claimed in any of claims 6 to 11, wherein the authorization recognition means (10) forms a first channel key capable of sharing with the content supply means (30) in response to a first registration request signal (22) inputted from the content supply means, and outputs an encoded first authentication qualification key and an encoded first authentication qualification key data (11) to the content supply means (30) via a secret channel formed the first channel key.

13. The system claimed in any of claims 6 to 12, wherein the content supply means (30) forms a second channel key capable of sharing with the first content output means (40) in response to the second registration request signal (31) input from the first content output means (40), and outputs a second authentication qualification key and an encoded authentication qualification key data to the first content output means (40) through a secret channel formed by the second channel key.

14. The system claimed in any of claims 6 to 13, wherein the first content output means (40) interprets and stores the second authentication qualification key and the second authentication qualification key data (32) inputted from the content supply means (30) through the secret channel by using the second channel key.

15. The system as claimed in claim 10, wherein the token is randomly generated by the authorization recognition means (10).

16. The system claimed in any of claims 6 to 9, wherein the first content output means (40) forms a third channel capable of being shared with the second content output means (50), encodes a third channel key with a token inputted from the content supply means (30) and transmits to the second content output means (50).

17. The system claimed in any of claims 6 to 9, wherein the second content output means (50) extracts a token from encoded manufacturer data from the first content output means (40) by using the stored manufacturer key in advance, interprets and stores the third channel key by using the token to form a secret channel with the first content output means (40).

18. The system of claim 16 or 17, wherein:
the content supply means (30) supplies an encoded digital content;
the first content output means (40) includes a database which has reproduction data of a digital content downloaded from the content supply means (30), encodes the database by using the third channel key for storage, interprets the reproduction data of the digital content inputted from external by using the third channel key to be compared with a reproduction data of the database, to thereby judge if an illegal copy of the digital content is performed; and
the second content output means (50) updates the reproduction data of the digital content stored in advance by interpreting the reproduction data of the digital content input from the first content output means (40) by using the third channel key, and transmits the updated reproduction data of the digital content to the first content output means (40).

19. The system as claimed in claim 18, wherein the database is separated with an identifier data area of the digital content, an updated token data area, an data area for a present state of the digital content, and a reproduction control data area, and has the corresponding data.

20. The system as claimed in claim 19, wherein the data area for the present state of the digital content includes:
data indicating that the digital content is downloaded in a copy form from the first content output means (40) to the second content output means (50);
data indicating that the digital content is downloaded in a transmission form from the first content output means (40) to the second content output means (50); and
data indicating that the digital content is downloaded and uploaded between the first content output means (40) and the second content output means (50).

21. The system claimed in claim 19, wherein the reproduction control data area of the digital content includes:
data for reproduction times of the digital content;
data for a reproduction expiration period of the digital content; and
data for an amnesty period of the digital content.

## Patentansprüche

1. System zum Verhindern eines illegalen Vervielfältigens digitaler Inhalte, umfassend:
die Autorisierungsbestätigungseinrichtung (10) zum Erzeugen eines ersten Authentisierungs-Qualifikationsschlüssels und erster Authentisierungs-Quatifikationsschlüsseldaten (11) in Reaktion auf ein extern eingegebenes zweites Registrierungsanforderungssignal (31),
die Inhaltbereitstellungseinrichtung (30) zum Übertragen des zweiten Registrierungsanforderungssignals (31) zu der Autorisierungsbestätigungseinrichtung (10) zum Speichern eines ersten Authentisierungs-Qualifikationsschlüssels und der ersten Authentisierungs-Qualifikationsschlüsseldaten (11), die von der Autorisierungsbestätigungseinrichtung (10) eingegeben wurden, und zum Erzeugen eines zweiten Authentisierungs-Qualifikationsschlüssels und zweiter Authentisierungs-Qualifikationsschlüsseldaten (32) und
die erste Inhaltausgabeeinrichtung (40) zum Ausgeben eines dritten Registrierungsanforderungssignals (41) zu der Inhaltbereitstellungseinrichtung (30) und zum Speichern des zweiten Authentisierungs-Qualifikationsschlüssels und der zweiten Authentisierungs-Qualifikationsschlüsseldaten (32), die von der Inhaltbereitstellungseinrichtung (30) eingegeben wurden,
**dadurch gekennzeichnet, dass**
die Autorisierungsbestätigungseinrichtung (10) einen ersten Kanalschlüssel bildet, der, in Reaktion auf ein von der Inhaltbereitstellungseinrichtung (30) eingegebenes erstes Registrierungsanforderungssignal (21), fähig ist, mit der Inhaltbereitstellungseinrichtung (30) gemeinsam benutzt zu werden,
und einen verschlüsselten ersten Authentisierungs-Qualifikationsschlüssel und verschlüsselte erste Authentisierungs-Qualifikationsschlüsseldaten (11) über einen durch den ersten Kanalschlüssel gebildeten geheimen Kanal zu der Inhaltbereitstellungseinrichtung (30) ausgibt.

2. System nach Anspruch 1, wobei die Inhaltbereitstellungseinrichtung (30) den ersten Authentisierungs-Qualifikationsschlüssel und die ersten Authentisierungs-Qualifikationsschlüsseldaten (11), die von der Autorisierungsbestätigungseinrichtung (10) unter Verwendung des ersten Kanalschlüssels über den geheimen Kanal eingeben wurden, interpretiert und speichert.

3. System nach Anspruch 1 oder 2, wobei die Inhaltbereitstellungseinrichtung (30) einen zweiten Kanalschlüssel bildet, der, in Reaktion auf ein von der ersten Inhaltausgabeeinrichtung (40) eingegebenes zweites Registrierungsanforderungssignal (31), fähig ist, mit der ersten Inhaltausgabeeinrichtung (40) gemeinsam benutzt zu werden, und einen zweiten Authentisierungs-Qualifikationsschlüssel und verschlüsselte Authentisierungs-Qualifikationsschlüsseldaten durch einen durch den zweiten Kanalschlüssel gebildeten geheimen Kanal zu der ersten Inhaltausgabeeinrichtung (40) ausgibt.

4. System nach Anspruch 1, 2 oder 3, wobei die erste Inhaltausgabeeinrichtung (40) den zweiten Authentisierungs-Qualifikationsschlüssel und die zweiten Authentisierungs-Quatifikationsschlüsseldaten (32), die durch die Inhaltbereitstellungseinrichtung (30) unter Verwendung des zweiten Kanalschlüssels durch den geheimen Kanal eingegeben wurden, interpretiert und speichert.

5. System nach einem der vorhergehenden Ansprüche, wobei
die Bestätigungseinrichtung (10) in Reaktion auf ein extern eingegebenes erstes Registrierungsanforderungssignal (22) einen Herstellerschlüssel und Herstellerschlüsseldaten (12) erzeugt, unter Verwendung des Herstellerschlüssels und der Herstellerschlüsseldaten eine erste Tabelle und eine zweite Tabelle erzeugt und in Reaktion auf das extern eingegebene zweite Registrierungsanforderungssignal (31) einen ersten Authentisierungs-Qualifikationsschlüssel und erste Authentisierungs-Qualifikationsschlüsseldaten (11) erzeugt.

6. System nach Anspruch 5 des Weiteren eine Aufzeichnungs-/Wiedergabevorrichtung-Bereitstellungseinrichtung (30) zum Ausgeben des ersten Registrierungsanforderungssignals (22) zu der Autorisierungsbestätigungseinrichtung (10) und zum Speichern des Herstellerschlüssels und der Herstellerschlüsseldaten (12), die von der Autorisierungsbestätigungseinrichtung (10) eingegeben wurden, umfassend.

7. System nach Anspruch 6, wobei
die Inhaltbereitstellungseinrichtung (30) die zweite Tabelle speichert und in Reaktion auf das extern eingegebene dritte Registrierungsanforderungssignal (41) den zweiten Authentisierungs-Qualifikationsschlüssel und die zweiten Authentisierungs-Qualifikationsschlüsseldaten (32) erzeugt und
die erste Inhaltausgabeeinrichtung (40) die extern eingegebenen Herstellerschlüsseldaten (12) zu der Inhaltbereitstellungseinrichtung (30) ausgibt und in Reaktion auf die Herstellerschlüsseldaten (12) den aus der zweiten Tabelle detektierten Herstellerschlüssel verschlüsselt und ausgibt.

8. System nach Anspruch 7 des Weiteren umfassend:
eine zweite Inhaltausgabeeinrichtung (50) zum Speichern des Herstellerschlüssels und der Herstellerschlüsseldaten (12), die von der Autorisierungsbestätigungseinrichtung (10) eingegeben wurden, zum Ausgeben der Herstellerschlüsseldaten (12) zu der Inhaltbereitstellungseinrichtung durch die erste Inhaltausgabeeinrichtung (40) und zum Vergleichen des Herstellerschlüssels mit dem von der ersten Inhaltausgabeeinrichtung (40) eingegebenen Herstellerschlüssel der zweiten Tabelle, um festzustellen, ob der gespeicherte Herstellerschlüssel authentisiert ist.

9. System nach einem der Ansprüche 6 bis 8, wobei die erste von der Autorisierungsbestätigungseinrichtung (10) erzeugte Tabelle die Herstellerschlüsseldaten (12), den Herstellerschlüssel und eine dem Herstellerschlüssel entsprechende Kennung enthält und nur in der Autorisierungsbestätigungseinrichtung (10) gespeichert ist.

10. System nach einem der Ansprüche 6 bis 9, wobei die von der Autorisierungsbestätigungseinrichtung (10) erzeugte und zu der Inhaltbereitstellungseinrichtung (30) ausgegebene zweite Tabelle eine Kennung hat, die den Herstellerschlüsseldaten (12) und dem Herstellerschlüssel, den Daten aus der Verschlüsselung des Herstellerschlüssels unter Verwendung eines Tokens und einem Token entspricht.

11. System nach einem der Ansprüche 6 bis 10, wobei des Weiteren eine Inhaltspeichereinrichtung (60), die an die erste Inhaltausgabeeinrichtung (40) oder an die zweite Inhaltbereitstellungseinrichtung (50) angeschlossen ist, einbezogen ist und die Daten, die aus der Inhaltbereitstellungseinrichtung (30) heruntergeladen wurden, speichert.

12. System nach einem der Ansprüche 6 bis 11, wobei die Autorisierungsbestätigungseinrichtung (10) einen ersten Kanalschlüssel bildet, der, in Reaktion auf ein von der Inhaltbereitstellungseinrichtung eingegebenes erstes Registrierungsanforderungssignal (22), fähig ist, mit der lnhaltausgabeeinrichtung (40) gemeinsam benutzt zu werden, und einen verschlüsselten ersten Authentisierungs-Qualifikationsschlüssel und verschlüsselte erste Authentisierungs-Qualifikationsschlüsseldaten (11) über einen durch den ersten Kanalschlüssel gebildeten geheimen Kanal zu der Inhaltbereitstellungseinrichtung (30) ausgibt.

13. System nach einem der Ansprüche 6 bis 12, wobei die Inhaltbereitstellungseinrichtung (30) einen zweiten Kanalschlüssel bildet, der, in Reaktion auf ein von der ersten Inhaltausgabeeinrichtung (40) eingegebenes zweites Registrierungsanforderungssignal (31), geeignet ist, gemeinsam mit der ersten Inhaltausgabeeinrichtung (40) benutzt zu werden, und einen zweiten Authentisierungs-Qualifikationsschlüssel und verschlüsselte Authentisierungs-Qualifikationsschlüsseldaten durch einen durch den zweiten Kanalschlüssel gebildeten geheimen Kanal zu der ersten Inhaltausgabeeinrichtung (40) ausgibt.

14. System nach einem der Ansprüche 6 bis 13, wobei die erste Inhaltausgabeeinrichtung (40) den zweiten Authentisierungs-Qualifikationsschlüssel und die zweiten Authentisierungs-Qualifikationsschlüsseldaten (32), die von der Inhaltbereitstellungseinrichtung (30) durch den geheimen Kanal unter Verwendung des zweiten Kanalschlüssels eingegeben wurden, interpretiert und speichert.

15. System nach Anspruch 10, wobei der Token durch die Autorisierungsbestätigungseinrichtung (10) zufällig erzeugt wird.

16. System nach einem der Ansprüche 6 bis 9, wobei die erste Inhaltausgabeeinrichtung (40) einen dritten Kanal, der fähig ist, mit der zweiten Inhaltausgabeeinrichtung (50) gemeinsam benutzt zu werden, bildet, einen dritten Kanalschlüssel mit einem von der Inhaltbereitstellungseinrichtung (30) eingegebenen Token verschlüsselt und an die zweite Inhaltausgabeeinrichtung (50) überträgt.

17. System nach einem der Ansprüche 6 bis 9, wobei die zweite Inhaltausgabeeinrichtung (50) aus den verschlüsselten Herstellerdaten aus der ersten Inhaltausgabeeinrichtung (40) unter Verwendung des gespeicherten Herstellerschlüssels im Voraus einen Token extrahiert, den dritten Kanalschlüssel unter Verwendung des Tokens interpretiert und speichert, um mit der ersten Inhaltausgabeeinrichtung (40) einen geheimen Kanal zu bilden.

18. System nach Anspruch 16 oder 17, wobei
die Inhaltbereitstellungseinrichtung (30) einen verschlüsselten digitalen Inhalt bereitstellt,
die erste Inhaltausgabeeinrichtung (40) eine Datenbank enthält, die aus der Inhaltbereitstellungseinrichtung (30) Wiedergabedaten eines digitalen Inhalts heruntergeladen hat, die Datenbank unter Verwendung des dritten Kanalschlüssels zum Speichern verschlüsselt, die extern eingegebenen Wiedergabedaten digitalen Inhalts unter Verwendung des dritten Kanalschlüssels interpretiert, um mit Wiedergabedaten der Datenbank verglichen zu werden, um dadurch festzustellen, ob ein illegales Vervielfältigen des digitalen Inhalts durchgeführt wird, und
die zweite Inhaltausgabeeinrichtung (50) durch das Interpretieren der von der ersten Inhaltausgabeeinrichtung (40) eingegebenen Wiedergabedaten unter Verwendung des dritten Kanalschlüssels die Wiedergabedaten des im Voraus gespeicherten digitalen Inhalts aktualisiert und die aktualisierten Wiedergabedaten des digitalen Inhalts an die erste Inhaltausgabeeinrichtung (40) überträgt.

19. System nach Anspruch 18, wobei die Datenbank in einen Kennungsdatenbereich des digitalen Inhalts, einen aktualisierten Token-Datenbereich, einen Datenbereich für einen aktuellen Zustand des digitalen Inhalts und einen Wiedergabesteuerdatenbereich aufgeteilt ist und die entsprechenden Daten aufweist.

20. System nach Anspruch 19, wobei der Datenbereich für den aktuellen Zustand des digitalen Inhalts enthält:
Daten, die anzeigen, dass der digitale Inhalt in einer Kopieform aus der ersten Inhaltausgabeeinrichtung (40) zu der zweiten Inhaltausgabeeinrichtung (50) heruntergeladen wird,
Daten, die anzeigen, dass der digitale Inhalt in einer Übertragungsform aus der ersten Inhaltausgabeeinrichtung (40) zu der zweiten Inhaltausgabeeinrichtung (50) heruntergeladen wird,
und
Daten, die anzeigen, dass der digitale Inhalt zwischen der ersten Inhaltausgabeeinrichtung (40) und der zweiten Inhaltausgabeeinrichtung (50) herunter- und hochgeladen wird.

21. System nach Anspruch 19. wobei die Wiedergabesteuerdaten des digitalen Inhalts enthalten:
Daten für die Wiedergabezeiten des digitalen Inhalts.
Daten für eine Ablaufperiode der Wiedergabe des digitalen Inhalts und
Daten für eine Amnestieperiode des digitalen Inhalts.

## Revendications

1. Système pour empêcher la copie illicite de données numériques, comprenant :
des moyens de reconnaissance d'autorisation (10) pour générer une première clé de qualification d'authentification et les données d'une première clé de qualification d'authentification (11) en réponse à un deuxième signal de demande d'enregistrement (31) entré de manière externe ;
des moyens de fourniture de contenu (30) pour transmettre le deuxième signal de demande d'enregistrement (31) aux moyens de reconnaissance d'autorisation (10), stocker une première clé de qualification d'authentification et les données de la première clé de qualification d'authentification (11) entrées depuis les moyens de reconnaissance d'autorisation (10), et générer une seconde clé de qualification d'authentification et les données d'une seconde clé de qualification d'authentification (32) ; et
des premiers moyens de sortie de contenu (40) pour sortir un troisième signal de demande d'enregistrement (41) vers les moyens de fourniture de contenu (30), et stocker la seconde clé de qualification d'authentification et les données de la seconde clé de qualification d'authentification (32) entrées depuis les moyens de fourniture de contenu (30) ;
**caractérisé en ce que** :
les moyens de reconnaissance d'autorisation (10) forment une première clé de canal pouvant être partagée avec les moyens de fourniture de contenu (30) en réponse à un premier signal de demande d'enregistrement (21) entré depuis les moyens de fourniture de contenu (30), et sortent une première clé de qualification d'authentification codée et les données d'une première clé de qualification d'authentification codée (11) vers les moyens de fourniture de contenu (30) via un canal secret formé par la première clé de canal.

2. Système selon la revendication 1, dans lequel les moyens de fourniture de contenu (30) interprètent et stockent la première clé de qualification d'authentification et les données de la première clé de qualification d'authentification (11) entrées depuis les moyens de reconnaissance d'autorisation (10) via le canal secret en utilisant la première clé de canal.

3. Système selon la revendication 1 ou 2, dans lequel les moyens de fourniture de contenu (30) forment une deuxième clé de canal pouvant être partagée avec les premiers moyens de sortie de contenu (40) en réponse au deuxième signal de demande d'enregistrement (31) entré depuis les premiers moyens de sortie de contenu (40), et sortent une seconde clé de qualification d'authentification et les données d'une clé de qualification d'authentification codée vers les premiers moyens de sortie de contenu (40) par l'intermédiaire d'un canal secret formé par la deuxième clé de canal.

4. Système selon la revendication 1, 2 ou 3, dans lequel les premiers moyens de sortie de contenu (40) interprètent et stockent la seconde clé de qualification d'authentification et les données de la seconde clé de qualification d'authentification (32) entrées depuis les moyens de fourniture de contenu (30) par l'intermédiaire du canal secret en utilisant la deuxième clé de canal.

5. Système selon l'une quelconque des revendications précédentes, dans lequel:
les moyens de reconnaissance (10) génèrent une clé de fabricant et les données d'une clé de fabricant (12) en réponse à un premier signal de demande d'enregistrement (22) entré de manière externe, génèrent une première table et une seconde table en utilisant la clé de fabricant et les données de la clé de fabricant, et génèrent une première clé de qualification d'authentification et les données d'une première clé de qualification d'authentification (11) en réponse au deuxième signal de demande d'enregistrement (31) entré depuis l'extérieur.

6. Système selon la revendication 5 comprenant en outre des moyens de fourniture d'un appareil d'enregistrement/reproduction (30) pour sortir le premier signal de demande d'enregistrement (22) vers les moyens de reconnaissance d'autorisation (10), et stocker la clé de fabricant et les données de la clé de fabricant (12) entrées depuis les moyens de reconnaissance d'autorisation (10).

7. Système selon la revendication 6, dans lequel :
les moyens de fourniture de contenu (30) stockent la seconde table et génèrent la seconde clé de qualification d'authentification et les données de la seconde clé de qualification d'authentification (32) en réponse au troisième signal de demande d'enregistrement (41) entré de manière externe ; et
les premiers moyens de sortie de contenu (40) sortent les données de la clé de fabricant (12) entrées de manière externe vers les moyens de fourniture de contenu (30), et codent et sortent la clé de fabricant détectée à partir de la seconde table en réponse aux données de la clé de fabricant (12).

8. Système selon la revendication 7 comprenant en outre :
un second moyen de sortie de contenu (50) pour stocker la clé de fabricant et les données de la clé de fabricant (12) entrées depuis les moyens de reconnaissance d'autorisation (10), sortir les données de la clé de fabricant (12) vers les moyens de fourniture de contenu par l'intermédiaire des premiers moyens de sortie de contenu (40), et comparer la clé de fabricant avec la clé de fabricant de la seconde table entrée depuis les premiers moyens de sortie de contenu (40) afin de juger si la clé de fabricant stockée est authentifiée.

9. Système selon l'une quelconque des revendications 6 à 8, dans lequel la première table générée à partir des moyens de reconnaissance d'autorisation (10) contient les données de la clé de fabricant (12), la clé de fabricant, et un identificateur correspondant à la clé de fabricant, et est stockée uniquement dans les moyens de reconnaissance d'autorisation (10).

10. Système selon l'une quelconque des revendications 6 à 9, dans lequel la seconde table générée à partir des moyens de reconnaissance d'autorisation (10) et sortie vers les moyens de fourniture de contenu (30) comporte un identificateur correspondant aux données de la clé de fabricant (12) et à la clé de fabricant, des données à partir du chiffrement de la clé de fabricant en utilisant un jeton, et un jeton.

11. Système selon l'une quelconque des revendications 6 à 10, dans lequel un moyen de stockage de contenu (60) est en outre compris qui est connecté aux premiers moyens de sortie de contenu (40) ou aux seconds moyens de sortie de contenu (50) et stocke les données téléchargées depuis les moyens de fourniture de contenu (30).

12. Système selon l'une quelconque des revendications 6 à 11, dans lequel les moyens de reconnaissance d'autorisation (10) forment une première clé de canal pouvant être partagée avec les moyens de fourniture de contenu (30) en réponse à un premier signal de demande d'enregistrement (22) entré depuis les moyens de fourniture de contenu, et sortent une première clé de qualification d'authentification codée et les données d'une première clé de qualification d'authentification codée (11) vers les moyens de fourniture de contenu (30) via un canal secret formé par la première clé de canal.

13. Système selon l'une quelconque des revendications 6 à 12, dans lequel les moyens de fourniture de contenu (30) forment une deuxième clé de canal pouvant être partagée avec les premiers moyens de sortie de contenu (40) en réponse au deuxième signal de demande d'enregistrement (31) entré depuis les premiers moyens de sortie de contenu (40), et sortent une seconde clé de qualification d'authentification et les données d'une clé de qualification d'authentification codée vers les premiers moyens de sortie de contenu (40) par l'intermédiaire d'un canal secret formé par la deuxième clé de canal.

14. Système selon l'une quelconque des revendications 6 à 13, dans lequel les premiers moyens de sortie de contenu (40) interprètent et stockent la seconde clé de qualification d'authentification et les données de la seconde clé de qualification d'authentification (32) entrées depuis les moyens de fourniture de contenu (30) par l'intermédiaire du canal secret en utilisant la deuxième clé de canal.

15. Système selon la revendication 10, dans lequel le jeton est généré de manière aléatoire par les moyens de reconnaissance d'autorisation (10).

16. Système selon l'une quelconque des revendications 6 à 9, dans lequel les premiers moyens de sortie de contenu (40) forment un troisième canal capable d'être partagé avec les seconds moyens de sortie de contenu (50), codent une troisième clé de canal avec un jeton entré depuis les moyens de fourniture de contenu (30) et transmettent aux seconds moyens de sortie de contenu (50).

17. Système selon l'une quelconque des revendications 6 à 9, dans lequel les seconds moyens de sortie de contenu (50) extraient un jeton des données de fabricant codées à partir des premiers moyens de sortie de contenu (40) en utilisant la clé de fabricant stockée à l'avance, interprètent et stockent la troisième clé de canal en utilisant le jeton pour former un canal secret avec les premiers moyens de sortie de contenu (40).

18. Système selon la revendication 16 ou 17, dans lequel :
les moyens de fourniture de contenu (30) fournissent un contenu numérique codé ;
les premiers moyens de sortie de contenu (40) comprennent une base de données qui comportent des données de reproduction d'un contenu numérique téléchargé depuis les moyens de fourniture de contenu (30), codent la base de données en utilisant la troisième clé de canal pour le stockage, interprètent les données de reproduction du contenu numérique entré depuis l'extérieur en utilisant la troisième clé de canal pour qu'elles soient comparées avec les données de reproduction de la base de données, pour ainsi juger si une copie illicite du contenu numérique est exécutée ; et
les seconds moyens de sortie de contenu (50) mettent à jour les données de reproduction du contenu numérique stocké à l'avance en interprétant les données de reproduction du contenu numérique entré depuis les premiers moyens de sortie de contenu (40) en utilisant la troisième clé de canal, et transmettent les donnée de reproduction mises à jour du contenu numérique aux premiers moyens de sortie de contenu (40).

19. Système selon la revendication 18, dans lequel la base de données est séparée avec une zone de données d'identificateur du contenu numérique, une zone de données de jeton mis à jour, une zone de données pour un état présent du contenu numérique, et une zone de données de contrôle de reproduction, et comporte les données correspondantes.

20. Système selon la revendication 19, dans lequel la zone de données pour l'état présent du contenu numérique comprend :
des données indiquant que le contenu numérique est téléchargé sous forme de copie depuis les premiers moyens de sortie de contenu (40) vers les seconds moyens de sortie de contenu (50) ;
des données indiquant que le contenu numérique est téléchargé sous forme de transmission depuis les premiers moyens de sortie de contenu (40) vers les seconds moyens de sortie de contenu (50) ; et
des données indiquant que le contenu numérique est téléchargé et téléversé entre les premiers moyens de sortie de contenu (40) et les seconds moyens de sortie de contenu (50).

21. Système selon la revendication 19, dans lequel la zone de données de contrôle de reproduction du contenu numérique comprend :
des données pour les temps de reproduction du contenu numérique ;
des données pour une période d'expiration de reproduction du contenu numérique ; et
des données pour une période d'amnistie du contenu numérique.
